# EUROPÄISCHE PATENTSCHRIFT

(11) **EP 2 132 263 B1**
(45) Veröffentlichungstag und Bekanntmachung des Hinweises auf die Patenterteilung: **16.11.2011**
(21) Anmeldenummer: 08718065.9
(22) Anmeldetag: 20.03.2008
(51) Int. Cl.: C08L 31/04, C08F 263/04, A23G 4/06, A23G 4/08, C08F 218/08

(54) **ZUSAMMENSETZUNGEN (COMPOUNDS) AUS POLYVINYLACETAT UND VINYLACETAT-VINYLLAURAT-COPOLYMERISAT**
COMPOUNDS MADE OF POLYVINYL ACETATE AND VINYL ACETATE-VINYL LAURATE COPOLYMER
COMPOSITIONS (COMPOUNDS) DE POLYACÉTATE DE VINYLE ET D'UN COPOLYMÈRE ACÉTATE DE VINYLE-LAURATE DE VINYLE

(30) Priorität: 02.04.2007 DE 102007015941; 02.04.2007 US 909497 P
(43) Veröffentlichungstag der Anmeldung: 16.12.2009
(73) Patentinhaber: Wacker Chemie AG, 81737 München (DE)
(72) Erfinder: WIMMER, Thomas, 84489 Burghausen (DE); HÖGL, Christian, 84367 Reut (DE); MÄDGE, Daniel, 84489 Burghausen (DE)
(74) Vertreter: Schuderer, Michael
(86) Internationale Anmeldenummer: PCT/EP2008/053345
(87) Internationale Veröffentlichungsnummer: WO 2008/119674

(56) Entgegenhaltungen:
- EP-A- 0 014 420
- WO-A-2007/024903
- GB-A- 2 143 416
- ANONYMOUS: "Zusammensetzungen (Compounds) aus Polyvinylacetat und Vinylacetat- Copolymerisat" IP.COM, [Online] 4. April 2007 (2007-04-04), XP002486166 Gefunden im Internet: URL:https://priorart.ip.com/download/IPCOM 000149681D/IPCOM000149681D.pdf> [gefunden am 2008-06-27]

## Beschreibung

Die Erfindung betrifft Zusammensetzungen (Compounds) aus Polyvinylacetat und Vinylacetat-Vinyllaurat-Copolymerisat, Verfahren zu deren Herstellung sowie deren Verwendung in Kaugummigrundmasse.

Üblicherweise setzen sich Kaugummizubereitungen aus einer wasserunlöslichen Kaugummigrundmasse (Gumbase) und einem wasserlöslichen Teil zusammen, wobei in letzterem Süß- und Geschmacksstoffe enthalten sind, die während des Kauens durch den Speichel herausgelöst werden.

Bei der Herstellung von Kaugummigrundmasse wird im Allgemeinen neben festen Elastomeren wie zum Beispiel Polyisobutylen, Isobutylen/Isopren-Mischpolymerisaten und/oder Butadien/Styrol-Mischpolymerisaten, ein Vinylacetat-Homopolymer als Polymerharz eingesetzt. Als Elastomerenlösungsmittel eignen sich zum Beispiel Polyterpene oder Glycerinester von Kolophonium oder partiell hydriertem Kolophonium. Als Plastifizierungsmittel werden häufig hydrierte Pflanzenöle, Kakaobutter, Paraffinwachse, natürliche Wachse sowie Polyethylen eingesetzt. Zusätzliche Weichmachung wird durch den Einsatz von Triacetin, Emulgatoren wie zum Beispiel Glycerinmonostearat, acetylierte Monoglyceride von natürlichen Fettsäuren und/oder Lecithin erreicht.

Die Herstellung der Kaugummigrundmassen kann ein- oder mehrstufig erfolgen. Üblicherweise werden in einem diskontinuierlichen Verfahren dazu Mixer oder Doppel-Z-Kneter mit hoher Scherkraft eingesetzt. Alternativ werden in der EP 0763328 A1 kontinuierliche Verfahren beschrieben, bei denen die Kaugummigrundmasse in einem Extruder hergestellt wird.

In der US-A 4968511 wird empfohlen als Kaugummigrundmasse (Gumbase) ein oder mehrere Copolymere aus der Gruppe der Vinylesterhomopolymere von Carbonsäuren mit 3 bis 10 C-Atomen, der Copolymeren von zwei verschiedenen Vinylestern, der Copolymere von Vinylester und Ethylen und der Terpolymeren von Vinylalkohol, Vinylester und Ethylen einzusetzen. Zur Herstellung der Gumbase werden die einzelnen Bestandteile der Rezeptur wie Polymerharz, Elastomer, Füllstoff und Emulgator, nacheinander in einen vorerwärmten Mischer dosiert.

Aus der US-A 5173317 ist bekannt, Vinylacetat-Vinyllaurat-Copolymere anstelle von Polyvinylacetat als Gumbase einzusetzen. Aufgrund der elastomeren Eigenschaften von Vinylacetat-Vinyllaurat-Copolymerisaten kann auf den Einsatz weiterer Elastomere in der Rezeptur verzichtet werden. Auch hier werden die einzelnen Bestandteile der Rezeptur nacheinander in einen vorerwärmten Mischer dosiert und in der Schmelze vermischt.

WO2007/024903 beschaftigt sich mit der Entwicklung von Kaugummimassen, welche sich leichter von Untergründen ablösen lassen. Die Verminderung der Klebrigkeit wird dabei durch Hinzufugen einer "non-stick-inducing component" erreicht. In der Ausfuhrungsform gemäß Beispiel 8 umfasst das beschriebene Verfahren der getrennten Zugabe von Polyvinylacetat und VAc-VL-Copolymer.

Nachteilig beim Einsatz von Vinylacetat-Vinyllaurat-Copolymeren ist, dass diese als zähelastische Blöcke anfallen, welche bei den üblichen Verfahren zur Herstellung von Kaugummimassen in Batch-Knetern oder Extrudern nicht ohne weiteres eingesetzt werden können. Die Blöcke müssen vorher zerkleinert werden, was aufgrund des zähelastischen Materials nur unter hohem Aufwand möglich ist, beispielsweise durch Tieffrieren der Masse und anschließendes Zerkleinern. Eine weitere Möglichkeit die Vinylacetat-Vinyllaurat-Copolymerisate in eine verarbeitungsgerechte Form zu bringen, ist diese zu schmelzen und als Schmelze in den Kneter oder Extruder zu dosieren.

Es bestand daher die Aufgabe, die Vinylacetat-Vinyllaurat-Copolymerisate so zu modifizieren, dass diese in einer Form zur Verfügung gestellt werden, welche die Dosierung bei der Verarbeitung zu Kaugummigrundmassen ermöglicht, ohne dass der Verarbeiter die genannten aufwendigen Prozessschritte durchführen muß, und mit der der Polymerharz- und/oder Elastomeranteil von konventionellen Formulierungen ganz oder teilweise ersetzt werden kann.

Gegenstand der Erfindung sind Zusammensetzungen (Compounds) in fester Form und in Form von partikeln, zusammengesetzt aus
a) 50 bis 90 Gew.-% Polyvinylacetat und
b) 10 bis 50 Gew.-% Vinylacetat-Vinyllaurat-Copolymerisat, jeweils bezogen auf das Gesamtgewicht der Zusammensetzung.

Die Zusammensetzungen (Compounds) liegen in homogener Form, das heißt in Form von Partikeln vor, welche sowohl Anteile an Polyvinylacetat a) als auch Anteile an Vinylacetat-Vinyllaurat-Copolymerisat b) enthalten. Die Compounds liegen in partikulärer, bei Raumtemperatur fester Form vor. Im Allgemeinen beträgt die Teilchengröße 1 bis 20 mm. Bevorzugt werden Granulate, Pastillen und Pellets. In einer weiteren bevorzugten Ausführungsform werden die Partikel mit Antiblockmittel gepudert, beispielsweise Talk oder hochdisperser Kieselsäure. Der Antiblockmittelanteil beträgt vorzugsweise bis zu 5 Gew.-% bezogen auf das Gewicht der Partikel.

Bevorzugt enthalten die Zusammensetzungen 60 bis 80 Gew.-% Polyvinylacetat und 20 bis 40 Gew.-% Vinylacetat-Vinyllaurat-Copolymerisat, jeweils bezogen auf das Gesamtgewicht der Zusammensetzung, und wobei sich die Angaben in Gew.-% jeweils auf 100 Gew.-% aufaddieren. Besonders bevorzugt werden Zusammensetzungen mit 65 bis 75 Gew.-% Polyvinylacetat und 25 bis 35 Gew.-% Vinylacetat-Vinyllaurat-Copolymer.

Bei den Polyvinylacetaten handelt es sich im Allgemeinen um Polyvinylacetat-Homopolymerisate. Wird das Polyvinylacetat in Gegenwart des Vinylacetat-Vinyllaurat-Copolymerisats hergestellt, können noch geringe Anteile Vinyllaurat copolymerisiert sein, im Allgemeinen weniger als 10 Gew.-%, vorzugsweise bis zu 5 Gew.-%, bezogen auf das Gesamtgewicht des Copolymerisats. Bevorzugt werden Polyvinylacetate mit einem gewichtsmittleren Molekulargewicht Mw von 10.000 bis 100.000, besonders bevorzugt 15.000 bis 55.000.

Das Vinylacetat-Vinyllaurat-Copolymerisat enthält vorzugsweise 50 bis 90 Gew.-% Vinylacctat-Einheiten und 10 bis 50 Gew.-% Vinyllaurat-Einheiten, besonders bevorzugt 60 bis 80 Gew.-% Vinylacetat-Einheiten und 20 bis 40 Gew.-% Vinyllaurat-Einheiten. Vorzugsweise beträgt das gewichtsmittlere Molekulargewicht Mw des Vinylacetat-Vinyllaurat-Copolymerisats 100.000 bis 600.000. Das gewichtsmittlere Molekulargewicht Mw wurde dabei jeweils mittels Size-Exclusion-Chromatography SEC, in THF mit Polystyrol-Standard, bestimmt.

Als Komponente a) können auch Gemische von Polyvinylacetaten mit unterschiedlichem Molekulargewicht eingesetzt werden. Desgleichen können als Komponente b) mehrere Vinylacetat-Vinyllaurat-Copolymere mit unterschiedlicher Copolymerisat-Zusammensetzung und/oder unterschiedlichem Molekulargewicht eingesetzt werden.

Die Herstellung der Compounds kann durch Vermischen der Schmelzen von einem oder mehreren Polyvinylacetaten a) und einem oder mehreren Vinylacetat-Vinyllaurat-Copolymerisaten b) erfolgen.

Dazu geeignete Polyvinylacetate a) und geeignete Vinylacetat-Vinyllaurat-Copolymerisate b) sind im Handel erhältlich, beispielsweise die Vinnapas^{R}-Festharze der Wacker Chemie AG. Die Polyvinylacetat-Komponente a) und die Vinylacetat-Vinyllaurat-Copolymerisat-Komponente b) können auch in bekannter Weise mittels Masse- oder Lösungspolymerisation hergestellt werden. Ein geeignetes Verfahren ist beispielsweise in der EP 1352914 B1 beschrieben. Dazu werden die entsprechenden Monomere in Gegenwart von Initiatoren wie Peroxid- oder Azo-Initiatoren, gegebenenfalls in einem meist alkoholischen Lösungsmittel und gegebenenfalls in Gegenwart von Reglern, bei einer Temperatur von im Allgemeinen 40°C bis 140°C polymerisiert, und gegebenenfalls Lösungsmittel und Regler sowie Restmonomer abdestilliert.

Zur Herstellung der Compounds mittels Vermischen der Schmelzen von Komponente a) und b) können das Polyvinylacetat a) und das Vinylacetat-Vinyllaurat-Copolymerisat b) als Feststoffe in einen vorzugsweise vorgeheizten Rührkessel, Kneter oder Extruder dosiert und bei einer Temperatur von vorzugsweise 80°C bis 140°C aufgeschmolzen und vermischt werden. Vorzugsweise wird so vorgegangen, dass das Polymer mit der niedrigeren Schmelzviskosität, meist das Copolymerisat b), bei Verarbeitungstemperatur vorgelegt wird und dann die andere Komponente, meist das Polyvinylacetat a), zugegeben wird. Die Mischzeit beträgt im Allgemeinen 5 bis 90 Minuten, je nachdem welche Mischeinheit gewählt wird.

Die damit erhältlichen Compounds werden nach dem Erkalten oder Abkühlen mechanisch zerkleinert, beispielsweise in einer Mühle oder einem Brecher. Die Compounds können auch als Schmelze auf einem Kühlband in Form von Streifen, Platten oder Tropfen abgekühlt werden. Eine weitere Alternative besteht darin, die Schmelze mittels Unterwassergranulierung zu Pellets zu verarbeiten, wobei bei den Pellets eine Teilchengröße von 1 mm bis 20 mm bevorzugt, und eine Teilchengröße von 3 mm bis 10 mm besonders bevorzugt wird. Es werden damit feste Compounds in partikulärer, dosierbarer und freifließender Form zugänglich.

In einer bevorzugten Ausführungsform werden die Compounds mittels Lösungspolymerisation hergestellt. Dazu werden die Comonomeren der Komponente b), Vinylacetat und Vinyllaurat, im gewünschten Mengenverhältnis, vorgelegt und die Polymerisation bei einer Temperatur von 40°C bis 120°C durchgeführt. Der Initiator kann ganz oder teilweise vorgelegt und der Rest zudosiert werden. Das Lösungsmittel kann ganz oder teilweise vorgelegt und der Rest zudosiert werden. Geeignete Lösungsmittel sind Aldehyde, Ketone, vorzugsweise Alkanole wie Methanol, Ethanol, Propanol, Isopropanol. Wenn die Monomeren der Komponente b) zu 60 bis 100 Gew.-%, vorzugsweise 60 bis 90 Gew.-%, copolymerisiert sind, wird zur Herstellung des Polyvinylacetats a) Vinylacetat zugegeben. Nach Abschluß der Vinylacetat-Dosierung und der Initiatordosierung kann gegebenenfalls noch nachpolymerisiert werden. Anschließend werden das Lösungsmittel und Restmonomeranteile destillativ entfernt, und das Produkt nach Abkühlung der Schmelze als Feststoff isoliert.

In einer weiteren bevorzugten Ausführungsform werden die Compounds ebenfalls mittels Lösungspolymerisation hergestellt, wobei Vinylacetat in Gegenwart des Vinylacetat-Vinyllaurat-Copolymerisats polymerisiert wird. Vorzugsweise wird dazu das Vinylacetat-Vinyllaurat-Copolymerisat zusammen mit Vinylacetat-Monomer vorgelegt und die Polymerisation bei einer Temperatur von 40°C bis 120°C durchgeführt. Der Initiator kann ganz oder teilweise vorgelegt und der Rest zudosiert werden. Das Lösungsmittel kann ganz oder teilweise vorgelegt und der Rest zudosiert werden. Geeignete Lösungsmittel sind Aldehyde, Ketone, vorzugsweise Alkanole wie Methanol, Ethanol, Propanol, Isopropanol. Nach Abschluß der Dosierungen kann gegebenenfalls noch nachpolymerisiert werden. Anschließend werden das Lösungsmittel und Restmonomeranteile destillativ entfernt, und das Produkt nach Abkühlung der Schmelze als Feststoff isoliert.

Die Aufarbeitung der bei der Lösungspolymerisation erhaltenen Schmelze und die Gewinnung der Compounds als Feststoffe erfolgt analog der bei der Herstellung der Compounds mittels Mischen der Komponenten a) und b) beschriebenen Verfahren. Mechanische Zerkleinerung nach Abkühlen der Schmelze, beispielsweise in einer Mühle oder einem Brecher. Auftragen der Schmelze auf ein Kühlband und Abkühlen in Form von Streifen, Platten oder Tropfen. Eine weitere Alternative besteht darin, die Schmelze mittels Unterwassergranulierung zu Pellets zu verarbeiten, wobei bei den Pellets eine Teilchengröße von 1 mm bis 20 mm bevorzugt und eine Teilchengröße von 3 mm bis 10 mm besonders bevorzugt wird. Es werden damit feste Compounds in partikulärer, dosierbarer und freifließender Form zugänglich. Unabhängig von der Herstellung werden feste, klare Partikel erhalten in denen die Komponenten a) und b) homogen verteilt sind.

Die Compounds eignen sich insbesondere für die Herstellung von Kaugummigrundmassen. Die Compounds werden vorzugsweise in einem Anteil von 10 bis 60 Gew.-%, bezogen auf das Gesamtgewicht der Kaugummigrundmasse, eingesetzt. Neben den Compounds enthalten diese Massen im Allgemeinen noch Elastomer, Füllstoff und gegebenenfalls weitere Zusatzstoffe.

Geeignete Elastomere für Kaugummigrundmassen sind Polyisobutylene, Isobutylen-Isopren-Copolymere, Styrol-Butadien-Copolymere sowie Naturkautschuk. Der Elastomeranteil beträgt im allgemeinen 10 bis 50 Gew.-%, bezogen auf das Gesamtgewicht der Kaugummigrundmasse. Der Elastomeranteil wird vorzugsweise ganz oder teilweise durch die erfindungsgemäße Zusammensetzung aus Polyvinylacetat und Vinylacetat-Vinyllaurat-Copolymerisat ersetzt.

Geeignete Füllstoffe sind Magnesiumcarbonat, Calciumcarbonat, Magnesiumsilikate, Aluminiumsilikate, Talkum, Titandioxid, Calciumphosphat sowie Celluloseether. Der Füllstoffanteil in der Formulierung beträgt im allgemeinen 10 bis 40 Gew.-%, bezogen auf das Gesamtgewicht der Kaugummigrundmasse.

Weitere Zusatzstoffe sind Wachse wie Paraffinwachs oder Polyethylenwachs, Weichmacher wie Kolophoniumharze oder Terpenharze, gehärtete Fette oder Glycerintriacetat, Emulgatoren wie Glycerinmonostearat oder Lecithin, Antioxidantien, Geschmacksstoffe und Farbstoffe. Die Einsatzmengen dieser Zusatzstoffe sind dem Fachmann bekannt.

Es sei darauf hingewiesen, dass sich die in Gew.-% benannten Einsatzmengen der Bestandteile der Kaugummigrundmasse in der Rezeptur jeweils auf 100 Gew.-% aufaddieren.

Die Herstellung von Kaugummigrundmasse erfolgt mit den dafür üblichen Verfahren. Im allgemeinen werden die Bestandteile der Kaugummigrundmasse, gegebenenfalls nach einem vorgeschalteten Granulier- oder Pulverisierungsschritt, vermischt, dann die Mischung auf üblicherweise 70°C bis 150°C erhitzt, im allgemeinen bis zu deren Schmelze, und anschließend die Kaugummigrundmasse extrudiert oder in Form gegossen.

### Beispiel 1:

In einem Rührkessel wurden 2 kg Isopropanol zusammen mit 16 kg Vinylacetat, 10 kg Vinyllaurat und 7 g t-Butylperoxo-2-ethylhexanoat vorgelegt und die Polymerisation mittels Aufheizen der Vorlage auf 72°C gestartet. Zum Start wurden 7 g t-Butylperoxo-2-ethylhexanoat zugegeben und während der Polymerisation 180 g Butylperoxo-2-ethylhexanoat in 700 g Isopropanol zudosiert. 240 Minuten nach dem Start wurde mit der Dosierung von 44 kg Vinylacetat begonnen und die Dosierung über einen Zeitraum von 165 Minuten fortgesetzt. Nach Abschluß der Dosierung 1 wurde noch 25 Minuten weitergerührt, die Temperatur auf 120°C erhöht, der Kessel evakuiert und Lösungsmittel und Restmonomer abdestilliert. Die Schmelze wurde abgelassen und auf einem Kühlband zu tropfenförmigen Partikeln mit einer Größe von 3 bis 6 mm abgekühlt. Man erhielt ein klares Produkt mit zwei Glasübergangstemperaturen Tg₁ = 2°C und Tg₂ = 29°C, sowie einem Molekulargewicht Mw von 141000.

### Beispiel 2:

In einem Rührkessel wurden 6 kg Isopropanol und 2 kg Vinylacetat zusammen mit 29 kg eines Vinylacetat-Vinyllaurat-Copolymerisats (60 Gew.-% Vinylacetat und 40 Gew.-% Vinyllaurat, Mw = 420.000) vorgelegt und die Vorlage auf 72°C aufgeheizt. Die Polymerisation wurde mittels Zugabe von 14 g t-Butylperoxopivalat gestartet. Nach 20 Minuten wurde die Dosierung von 100 g t-Butylperoxo-2-ethylhexanoat in 272 g Isopropanol gestartet und über einen Zeitraum von 3 Stunden fortgesetzt. 50 Minuten nach dem Reaktionsstart wurde mit der Dosierung von 41 kg Vinylacetat begonnen und über 2,5 Stunden fortgesetzt. Nach Abschluß der Dosierungen wurde noch 25 Minuten weitergerührt, die Temperatur auf 120°C erhöht, der Kessel evakuiert, und Lösungsmittel und Restmonomer abdestilliert. Die Schmelze wurde abgelassen und mittels Unterwassergranulation zu Granulen mit einer Teilchengröße von 1 bis 2 mm verarbeitet. Man erhielt ein klares Produkt mit zwei Glasübergangstemperaturen Tg₁ = - 1°C und Tg₂ = 32°C, sowie einem Molekulargewicht Mw von 169000.

### Beispiel 3:

In einem Laborkneter (Doppel-Z-Knethaken) wurden bei 120°C bis 140°C 40 Gew.-Teile eines Vinylacetat/Vinyllaurat-Copolymerisats (60 Gew.-% Vinylacetat, 40 Gew.-% Vinyllaurat, Mw = 420.000) vorgelegt und 60 Gew.-Teile eines Vinylacetat-Homopolymers (Mw = 15.000) zugegeben und die Mischung 1 Stunde zu einem Compound verknetet. Anschließend ließ man die Schmelze zu einer Platte erstarren, welche mechanisch zu Partikeln mit einer Partikelgröße von 1 bis 20 mm zerkleinert wurde. Man erhielt ein klares Produkt mit zwei Glasübergangstemperaturen Tg₁ = 0°C und Tg₂ = 38°C.

### Beispiel 4:

In einem Laborkneter (Doppel-Z-Knethaken) wurden bei 120°C bis 140°C 30 Gew.-Teile eines Vinylacetat/Vinyllaurat-Copolymerisats (60 Gew.-% Vinylacetat, 40 Gew.-% Vinyllaurat, Mw = 420.000) vorgelegt und 70 Gew.-Teile eines Vinylacetat-Homopolymers (Mw = 40.000) zugegeben und die Mischung 1 Stunde zu einem Compound verknetet. Anschließend ließ man die Schmelze zu einer Platte erstarren, welche mechanisch zu Partikeln mit einer Partikelgröße von 1 bis 20 mm zerkleinert wurde. Man erhielt ein klares Produkt mit zwei Glasübergangstemperaturen Tg₁ = 0°C und Tg₂ = 38°C.

### Beispiel 5: Herstellung einer Kaugummigrundmasse

In einem konventionellen Kneter wurden bei 120°C folgende Zutaten zu einer Gumbase verarbeitet:

| | |
|---|---|
| 40 Gew.-Teile | Compound aus Beispiel 3 |
| 20 Gew.-Teile | Glycerinester eines partiell hydrierten Ko-lophoniums |
| 20 Gew.-Teile | Calciumcarbonat |
| 10 Gew.-Teile | mikrokristallines Wax |
| 5 Gew.-Teile | Pflanzenfett |
| 3.5 Gew. Teile | Glycerinmonostearat |
| 0.5 Gew.-Teile | Soyalecithin |

Die Mischdauer um eine homogene Masse zu erhalten betrug 90 Minuten.

### Beispiel 6: Herstellung einer Kaugummigrundmasse

| | |
|---|---|
| 35 Gew.-Teile | Compound aus Beispiel 2 |
| 5 Gew.-Teile | Polyvinylacetat (Mw = 15.000) |
| 22 Gew.-Teile | Glycerinester eines partiell hydrierten Ko-lophoniums |
| 25 Gew.-Teile | Talk |
| 4 Gew.-Teile | Paraffinwax |
| 5 Gew.-Teile | hydriertes Rapsöl |
| 4 Gew.-Teile | Glycerinmonostearat |

Die Mischdauer um eine homogene Masse zu erhalten betrug 90 Minuten.

### Vergleichsbeispiel 7:

Herstellung der Kaugummigrundmasse in konventioneller Formulierung

| | |
|---|---|
| 4 Gew.-Teile | Butylrubber |
| 7 Gew.-Teile | Polyisobutylen |
| 26 Gew.-Teile | Polyvinylacetat (Mw = 15.000) |
| 21 Gew.-Teile | Glycerinester eines partiell hydrierten Ko-lophoniums |
| 24 Gew.-Teile | Talk |
| 8 Gew.-Teile | mikrokristallines Wachs |
| 6 Gew.-Teile | hydriertes Rapsöl |
| 4 Gew.-Teile | Glycerinmonostearat |

Die Mischdauer um eine homogene Masse zu erhalten betrug 150 Minuten.

Der Vergleich der Beispiele 5 und 6 mit dem Vergleichsbeispiel 7 zeigt, dass sich bei Austausch der Elastomerkomponente und der Polymerharzkomponente durch die erfindungsgemäße Zusammensetzung die Herstellungsdauer einer Kaugummigrundmasse deutlich reduziert. Darüberhinaus sind die erfindungsgemäßen Zusammensetzungen im Vergleich zu herkömmlichen Vinylacetat-Vinyllaurat-Elastomeren wesentlich einfacher zu verarbeiten, da sie in gebrauchsfertiger, partikulärer Form vorliegen.

### Beispiel 8: Herstellung eines zuckerfreien Kaugummis

In einem Laborkneter wurden bei 45°C bis 60 °C mit folgenden Inhaltsstoffen eine Kaugummimasse hergestellt

| | |
|---|---|
| 25 Gew.-Teile | Kaugummigrundmasse aus Beispiel 5 |
| 15 Gew.-Teile | Xylitol |
| 52 Gew.-Teile | Sorbitol |
| 6.8 Gew.-Teile | Sorbitol-Syrup |
| 1 Gew.-Teile | Pfefferminzöl |
| 0.2 Gew.-Teile | Aspartam |

## Patentansprüche

1. Zusammensetzungen in fester Form und in Form von Partikeln Zusammen gesetzt aus
a) 50 bis 90 Gew.-% Polyvinylacetat und
b) 10 bis 50 Gew.-% Vinylacetat-Vinyllaurat-Copolymerisat, jeweils bezogen auf das Gesamtgewicht der Zusammensetzung.

2. Zusammensetzungen gemäß Anspruch 1, **dadurch gekennzeichnet, dass** Vinylacetat-Vinyllaurat-Copolymerisat 50 bis 90 Gew.-% Vinylacetat-Einheiten und 10 bis 50 Gew.-% Vinyllaurat-Einheiten enthält.

3. Zusammensetzungen gemäß Anspruch 1 oder 2, **dadurch gekennzeichnet, dass** das gewichtsmittlere Molekulargewicht Mw des Polyvinylacetats a) von 10.000 bis 100.000 beträgt und das gewichtsmittlere Molekulargewicht Mw des Vinylacetat-Vinyllaurat-Copolymerisats b) von 100.000 bis 600.000 beträgt.

4. Zusammensetzungen gemäß Anspruch 1 bis 3, **dadurch gekennzeichnet, dass** diese in Form von Partikeln mit einer Teilchengröße von 1 bis 20 mm vorliegen.

5. Verfahren zur Herstellung von Zusammensetzungen gemäß Anspruch 1 bis 4 durch Vermischen der Schmelzen von einem oder mehreren Polyvinylacetaten a) und einem oder mehreren Vinylacetat-Vinyllaurat-Copolymerisaten b), Abkühlen der Schmelze und Zerkleinerung.

6. Verfahren zur Herstellung von Zusammensetzungen gemäß Anspruch 1 bis 4 mittels Lösungspolymerisation der Comonomeren der Komponente b), Vinylacetat und Vinyllaurat, im gewünschten Mengenverhältnis, wobei bei einem Monomerumsatz von 60 bis 100 Gew.-% der Comonomeren b), Vinylacetat-Monomer a) zugegeben und polymerisiert wird, und das Produkt als Feststoff isoliert wird.

7. Verfahren zur Herstellung von Zusammensetzungen gemäß Anspruch 1 bis 4 mittels Lösungspolymerisation, wobei Vinylacetat a) in Gegenwart des Vinylacetat-Vinyllaurat-Copolymerisats b) polymerisiert wird, und das Produkt als Feststoff isoliert wird.

8. Verwendung der Zusammensetzungen gemäß Anspruch 1 bis 4 zur Herstellung von Kaugummigrundmassen.

9. Verwendung nach Ansspruch 8, wobei der Elastomeranteil und/oder Polymerharzanteil in der Kaugummigrundmasse ganz oder teilweise durch die Zusammensetzungen gemäß Anspruch 1 bis 3 ersetzt wird.

## Claims

1. Compounds in solid form and in the form of particles composed of
a) from 50 to 90% by weight of polyvinyl acetate and
b) from 10 to 50% by weight of vinyl acetate-vinyl laurate copolymer,
based in each case on the total weight of the compound.

2. Compounds according to Claim 1, **characterized in that** vinyl acetate-vinyl laurate copolymer contains from 50 to 90% by weight of vinyl acetate units and from 10 to 50% by weight of vinyl laurate units.

3. Compounds according to Claim 1 or 2, **characterized in that** the weight-average molecular weight Mw of the polyvinyl acetate a) is from 10 000 to 100 000 and the weight-average molecular weight Mw of the vinyl acetate-vinyl laurate copolymer b) is from 100 000 to 600 000.

4. Compounds according to Claim 1 to 3, **characterized in that** they are present in the form of particles with a particle size of from 1 to 20 mm.

5. Process for producing compounds according to Claim 1 to 4 by mixing the melts of one or more polyvinyl acetates a) and one or more vinyl acetate-vinyl laurate copolymers b), cooling the melt and comminuting.

6. Process for producing compounds according to Claim 1 to 4 by means of solution polymerization of the comonomers of component b), vinyl acetate and vinyl laurate, in the desired quantitative ratio, wherein vinyl acetate monomer a) is added and polymerized in the case of a monomer conversion of from 60 to 100% by weight of the comonomers b), and the product is isolated as a solid.

7. Process for producing compounds according to Claim 1 to 4 by means of solution polymerization, wherein vinyl acetate a) is polymerized in the presence of the vinyl acetate-vinyl laurate copolymer b), and the product is isolated as a solid.

8. Use of the compounds according to Claim 1 to 4 for producing chewing gum bases.

9. Use according to Claim 8, wherein the elastomer content and/or polymer resin content in the chewing gum base is replaced completely or partly by the compounds according to Claim 1 to 3.

## Revendications

1. Compositions sous forme solide et sous forme de particules, composées de
a) 50 à 90 % en poids d'acétate de polyvinyle, et
b) 10 à 50 % en poids de copolymère d'acétate de vinyle-laurate de vinyle,
rapportés respectivement au poids total de la composition.

2. Compositions selon la revendication 1, **caractérisées en ce que** le copolymère d'acétate de vinyle-laurate de vinyle contient 50 à 90 % en poids d'unités d'acétate de vinyle et 10 à 50 % en poids d'unités de laurate de vinyle.

3. Compositions selon la revendication 1 ou 2, **caractérisées en ce que** le poids moléculaire moyen Mw de l'acétate de polyvinyle a) vaut de 10 000 à 100 000 et le poids moléculaire moyen Mw du copolymère d'acétate de vinyle-laurate de vinyle b) vaut de 100 000 à 600 000.

4. Compositions selon les revendications 1 à 3, **caractérisées en ce que** celles-ci se présentent sous la forme de particules avec une taille de particules de 1 à 20 mm.

5. Procédé de fabrication de compositions selon les revendications 1 à 4 par mélange des bains fondus d'un ou de plusieurs acétates de polyvinyle a) et d'un ou de plusieurs copolymères d'acétate de vinyle-laurate de vinyle b), refroidissement du bain fondu et broyage.

6. Procédé de fabrication de compositions selon les revendications 1 à 4 par polymérisation en solution des comonomères des composants b), acétate de vinyle et laurate de vinyle, dans le rapport quantitatif souhaité, dans lequel, pour une conversion de monomères de 60 à 100 % en poids des comonomères b), on ajoute et on polymérise un monomère d'acétate de vinyle a), et on isole le produit sous forme solide.

7. Procédé de fabrication de compositions selon les revendications 1 à 4 par polymérisation en solution, dans lequel on polymérise de l'acétate de vinyle a) en présence du copolymère d'acétate de vinyle-laurate de vinyle b), et on isole le produit sous forme solide.

8. Utilisation des compositions selon les revendications 1 à 4 pour la fabrication de masses de base de gomme à mâcher.

9. Utilisation selon la revendication 8, dans laquelle la fraction élastomère et/ou la fraction de résine polymère dans la masse de base de gomme à mâcher est remplacée totalement ou partiellement par les compositions selon les revendications 1 à 3.
